# EUROPÄISCHE PATENTSCHRIFT

(11) **EP 3 230 571 B1**
(45) Veröffentlichungstag und Bekanntmachung des Hinweises auf die Patenterteilung: **30.10.2019**
(21) Anmeldenummer: 15794851.4
(22) Anmeldetag: 02.11.2015
(51) Int. Cl.: F02C 6/16

(54) **VORRICHTUNG UND VERFAHREN ZUM VORÜBERGEHENDEN SPEICHERN VON GAS UND WÄRME**
DEVICE AND METHOD FOR TEMPORARILY STORING GAS AND HEAT
DISPOSITIF ET PROCÉDÉ POUR LE STOCKAGE TEMPORAIRE DE GAZ ET DE CHALEUR

(30) Priorität: 11.12.2014 DE 102014118466
(43) Veröffentlichungstag der Anmeldung: 18.10.2017
(73) Patentinhaber: APT GmbH - Angewandte Physik & Technologie, 34497 Korbach (DE)
(72) Erfinder: GEISLER, Bernd, 34497 Korbach (DE)
(74) Vertreter: Bossmeyer, Jörg Peter
(86) Internationale Anmeldenummer: PCT/EP2015/075494
(87) Internationale Veröffentlichungsnummer: WO 2016/091475

(56) Entgegenhaltungen:
- WO-A1-2015/150104
- DE-A1-102008 033 527
- FR-A1- 3 014 182
- US-A1- 2011 094 231

## Beschreibung

Die Erfindung betrifft eine Vorrichtung zum vorübergehenden Speichern von Gas und Wärme, mit wenigstens einem Druckbehälter, mehreren Verdichtern, mittels welchen ein Gas komprimierbar ist, mehreren in Reihe geschalteten Kompressionsstufen, die jeweils einen der Verdichter und einen diesem nachgeschalteten Gasströmungspfad umfassen, wobei einer reihenletzten der Kompressionsstufen der Druckbehälter nachgeschaltet ist, in welchem das mittels der Verdichter komprimierte Gas speicherbar ist, und einer mehrere Wärmespeicher umfassenden Wärmespeicheranordnung, mittels welcher durch das Komprimieren des Gases erzeugte Kompressionswärme speicherbar ist. Die Erfindung betrifft ferner ein Verfahren zum vorübergehenden Speichern von Gas und Wärme, wobei ein Gas in mehreren Kompressionsstufen nacheinander komprimiert und anschließend in wenigstens einem Druckbehälter gespeichert wird, und wobei durch das Komprimieren des Gases erzeugte Kompressionswärme nach jeder Kompression in mehreren Wärmespeichern gespeichert wird.

Die DE 10 2010 050 428 A1 offenbart ein Druckstufen-Wärme-Speicherkraftwerk zum zeitweiligen Speichern von Energie in Form von Druckenergie in einem kompressiblen Medium in einem Druckspeicher und in Form von Wärmeenergie, mit zumindest einer Einspeicher-Druckstufe, die in Reihe geschaltet zumindest eine Kompressionsvorrichtung und zumindest eine Wärmeaustauschvorrichtung aufweist, und zumindest einer Ausspeicher-Druckstufe, die in Reihe geschaltet zumindest eine Wärmeaustauschvorrichtung und zumindest eine Expansionsvorrichtung aufweist, wobei eine Anzahl der Einspeicher-Druckstufen ungleich einer Anzahl der Ausspeicher-Druckstufen ist. In den Dokumenten US 2011/0094231 A1 und DE 10 2008 033 527 A1 werden weitere Speichersysteme beschrieben. Der Inhalt der Schrift WO 2015/150104 A1 gilt als Stand der Technik nach Artikel 54(3) EPÜ.

Bei vielen technischen Anwendungen fällt Prozesswärme an, die abgeführt werden muss. Beispiele zu deren Nutzung sind Blockheizkraftwerke und Fernwärme. Oftmals wäre auch die Rückgewinnung der Wärme energetisch vorteilhaft. Eine direkte Rückgewinnung kann z.B. mit Wärmetauschern im Gleich- und Gegenstromverfahren erreicht werden, was dann oft hohe Energieeinsparungen ermöglicht.

Bei mechanischen Energiespeichern ist die Wärmerückgewinnung eine unverzichtbare Voraussetzung für akzeptable Gesamtwirkungsgrade. Ein dynamisches Verfahren als Gleich- oder Gegenstromverfahren ist hierbei jedoch nicht unbedingt zweckmäßig, weil Be- und Entladung des Energiespeichers zeitlich möglichst weit voneinander entkoppelt sein sollen. Marktübliche Wärmetauscher zeichnen sich demgegenüber aus durch ihren kontinuierlichen, gleichzeitigen parallelen oder antiparallelen Fluss. Das Fließen des Speichermediums verlangt zusätzlichen Energieaufwand für die Umwälzung, der eingespart werden kann.

Wenn Energie in Form von Druckluft gespeichert wird, entsteht notwendigerweise bei der Kompression Wärme (1. Hauptsatz der Thermodynamik).

Am einfachsten ist diese Wärme für das Beispiel eines idealen isothermen Kompressors zu berechnen. Sie beträgt theoretisch rund 1/3 der aufgewendeten Kompressionsarbeit. In der Praxis wird die Wärme meist an die Umgebung abgegeben, und die Wärmeverluste liegen meist auch noch erheblich höher, etwa bei 2/3 der aufgewendeten Kompressionsarbeit. Die Erfindung zielt daher insbesondere auf ein adiabatisches Druckluft-Speicherkraftwerk ab (engl. Adiabatic Compressed Air Energy Storage, ACAES). Dabei ist das Adjektiv adiabatisch hier nicht streng im thermodynamischen Sinne zu verstehen (gar kein Wärmeaustausch mit der Umgebung), sondern soll bedeuten, dass die bei der Kompression entstehende Wärme weitest möglich zurück gewonnen werden soll.

Anhand der thermischen Zustandsgleichung idealer Gase p*V = n*R*T (die realistischere van-der-Waals-Gleichung bedingt lediglich eine Korrektur von circa 10%) und anhand der kalorischen Zustandsgleichung für ein zweiatomiges Gas U = 5/2*n*R*T (Luft ist zu 99% ein zweiatomiges Gas) wird ersichtlich, dass für ein Arbeitsgas in einem vorgegebenen Volumen V eine Erhöhung des Drucks p durch Erhöhung der Temperatur T oder der Stoffmenge n oder beides bewirkt wird. In jedem Fall ist dies dann gleichbedeutend mit einer Erhöhung der inneren Energie U bzw. der Enthalpie H = U + p*V des Gases. R bezeichnet die universelle Gaskonstante.

Für den Energiegewinn bzw. für den Enthalpiegewinn des Systems durch Wärmezufuhr spielt effektiv keine Rolle, ob eine solche Druckerhöhung durch Erhöhung der Molekülanzahl im Druckbehälter oder durch Temperaturerhöhung, also Erhöhung der Teilchenbewegung zustande kommt.

Durch Zufuhr bzw. Rückgewinnung der Kompressionswärme werden in einem solchen quasi-adiabatischen System Gesamtwirkungsgrade möglich, die theoretisch weit über denen herkömmlicher Kompressoren und Turbinen liegen.

In der Praxis lässt sich die adiabatische Isolierung eines riesigen Hochdruckbehälters wahrscheinlich nicht verwirklichen. Denn wäre die thermische Isolierung außerhalb des Druckbehälters angebracht, dann würde sich die Behälterwand aufwärmen. Aufgrund der enormen Wärmekapazität des Druckbehälters würde dann die Kompressionswärme lediglich in einer geringfügigen Temperaturerhöhung der Behälterwand resultieren und wäre auf diesem niedrigen Temperaturniveau dann für eine praktikable, direkte Rückgewinnung weitgehend verloren. Eine innerhalb des Hochdruckbehälters angebrachte thermische Isolierung wäre dagegen enormen Druck- und Temperaturschwankungen ausgesetzt (mehrere hundert bar, mehrere hundert Kelvin), die sie auf Dauer zerstören würden. Als Konsequenz sollte sich der Hochdruckbehälter auf dem Temperaturniveau seiner Umgebung befinden.

Dies bedingt eine notwendige Zwischenspeicherung der Kompressionswärme. Hierbei tritt nun ein anderes grundsätzliches Problem auf: Wärme lässt sich bei hohen Temperaturdifferenzen zwar gut übertragen und solche sind bei Wärmekraftmaschinen auch prinzipiell vorteilhaft (siehe Carnot-Wirkungsgrad), aber die Verluste durch Konvektion, Leitung und insbesondere Strahlung (proportional zur vierten Potenz der Temperatur, laut Stefan-Boltzmann-Gesetz) nehmen ebenfalls entsprechend zu.

Daher sind Hochtemperatur-Wärmespeicher prinzipiell ungeeignet für längere Zeiträume, wie sie bei der Energiespeicherung aber grundsätzlich erwünscht sind. Ein bekannter Hochtemperaturspeicher leidet unter anderem auch darunter, dass die angesprochenen hohen Temperatur- und Druckdifferenzen das Speichermaterial (z.B. Stein) mechanisch zersetzen und die daraus entstehenden Partikel bei der Expansion die Turbinenschaufeln sandstrahlen können.

Phasenwechselmaterialien bzw. Phase-Change-Materials (PCM) sind für die auftretenden Temperaturdifferenzen nicht geeignet bzw. befinden sich noch im Versuchsstadium. Sie degradieren mit der Zeit und wären nach derzeitigem Wissensstand nicht leistungsfähig genug. Auch die bekannten industriellen Adsorptionsspeicher Silikagel und Zeolith sind nicht geeignet, weil ein Großteil der Kompressionswärme unterhalb deren Entladungstemperaturen anfällt und die Wärmeübertragung ein kontinuierlicher und kein diskreter Vorgang ist. Mit diesen Materialien könnte also lediglich der relativ geringe Wärmeanteil wiedergewonnen werden, der oberhalb ihrer Entladungstemperaturen anfällt. Der überwiegende Restwärmeanteil auf niedrigerem Temperaturniveau wäre verloren.

Ein Ausweg könnte ein mehrstufiger Niedrigtemperatur-Wärmespeicher sein. Ein derart konstruiertes adiabatisches bzw. quasi-adiabatisches Druckluft-Speicherkraftwerk könnte dann nicht an den Carnot-Wirkungsgrad gebunden sein, was sich im Gedankenversuch nachvollziehen lässt, indem der Kompressor innerhalb des adiabatisch isolierten Druckgefäßes anordnet wird. Dann müsste seine Abwärme auf das Arbeitsgas übergehen, sodass theoretisch die Energie des Kompressors vollständig nutzbar wäre.

Der Erfindung liegt somit die Aufgabe zugrunde, eine Vorrichtung und ein Verfahren der eingangs genannten Art derart weiterzubilden, dass möglichst viel Kompressionswärme in der Wärmespeicheranordnung speicherbar ist.

Diese Aufgabe wird erfindungsgemäß durch eine Vorrichtung nach Anspruch 1 und durch ein Verfahren nach Anspruch 9 gelöst. Bevorzugte Weiterbildungen der Erfindung sind in den Unteransprüchen und in der nachfolgenden Beschreibung gegeben.

Die erfindungsgemäße Vorrichtung zum vorübergehenden Speichern von Gas und Wärme weist einen oder wenigstens einen Druckbehälter, mehrere Verdichter, mittels welchen ein Gas komprimierbar ist, mehrere in Reihe geschaltete Kompressionsstufen, die jeweils einen der Verdichter und einen diesem nachgeschalteten Gasströmungspfad umfassen, wobei einer reihenletzten der Kompressionsstufen der Druckbehälter nachgeschaltet ist, in welchem das mittels der Verdichter komprimierte Gas speicherbar ist, und eine mehrere Wärmespeicher umfassende Wärmespeicheranordnung auf, mittels welcher durch das Komprimieren des Gases erzeugte Kompressionswärme speicherbar ist, wobei die Wärmespeicheranordnung in den Gasströmungspfad jeder Kompressionsstufe geschaltet ist, den Wärmespeichern eine Wärmespeicherreihenfolge zugeordnet ist und die Wärmespeicher von dem Gasströmungspfad jeder Kompressionsstufe, insbesondere bezüglich der jeweiligen Gasströmungsrichtung, in der Wärmespeicherreihenfolge nacheinander durchlaufen sind oder werden. Bevorzugt ist Kompressionswärme somit in jeder Kompressionsstufe, insbesondere stufenweise, an die Wärmespeicher abgebbar.

Gemäß der Erfindung ist in den Gasströmungspfad jeder Kompressionsstufe eine Reihenschaltung der Wärmespeicher geschaltet, wobei die Wärmespeicher in jedem dieser Gasströmungspfade in derselben Reihenfolge hintereinander geschaltet sind. Die Wärmespeicheranordnung bildet somit einen jedem Verdichter nachgeschalteten Stufenwärmespeicher, dessen Stufen durch die Wärmespeicher gebildet sind. Bevorzugt nehmen dabei die Temperaturen der Wärmespeicher in der Wärmespeicherreihenfolge ab. Durch die erfindungsgemäße Vorrichtung ist ein deutlich höherer Anteil der Kompressionswärme in der Wärmespeicheranordnung speicherbar als bei herkömmlichen Lösungen. Insbesondere ist die Wärmespeicheranordnung bei Niedrigtemperatur betreibbar und wird vorzugsweise auch bei Niedrigtemperatur betrieben.

Die Anzahl der Kompressionsstufen beträgt bevorzugt zwei, wenigstens zwei, drei oder wenigstens drei. Insbesondere entspricht die Anzahl der Verdichter der Anzahl der Kompressionsstufen. Vorzugsweise umfasst jede Kompressionsstufe genau einen der Verdichter. Bevorzugt ist jeder Verdichter genau einer der Kompressionsstufen zugeordnet und/oder in dieser vorgesehen. Die Wärmespeicheranordnung und/oder die Wärmespeicher umfassen insbesondere keine Verdichter.

Jeder Verdichter kann z.B. auch als Kompressor oder Kompressionsmaschine bezeichnet werden. Beispielsweise ist jeder Verdichter ein Turboverdichter, ein Schraubenverdichter oder ein Kolbenverdichter.

Der Druckbehälter ist bevorzugt gegenüber der Umgebung nicht thermisch isoliert. Vorzugsweise weist das in dem Druckbehälter gespeicherte Gas Umgebungstemperatur oder näherungsweise Umgebungstemperatur auf. Der Druckbehälter kann z.B. auch mehrere hintereinander geschaltete Druckbehältnisse umfassen und/oder aus diesen zusammengesetzt sein.

Bevorzugt sind die Wärmspeicher thermisch voneinander und/oder gegenüber der Umgebung isoliert. Somit kann verhindert werden, dass sich ein thermisches Gleichgewicht unter den Wärmespeichern einstellt.

Erfindungsgemäss ist jedem Wärmespeicher eine vorgegebene Mindesttemperatur zugeordnet, und die Wärmespeicheranordnung weist wenigstens eine Heizvorrichtung auf, mittels welcher jeder Wärmespeicher auf die ihm zugeordnete Mindesttemperatur erwärmbar ist, wobei die den Wärmespeichern zugeordneten Mindesttemperaturen in der Wärmespeicherreihenfolge abnehmen.

Hierdurch kann sichergestellt werden, dass jeder Wärmespeicher zumindest die ihm zugeordnete Mindesttemperatur aufweist. Bevorzugt weist jeder Wärmespeicher eine Heizvorrichtung oder eine der Heizvorrichtungen auf. Insbesondere ist jeder Wärmespeicher durch seine Heizvorrichtung auf die ihm zugeordnete Mindesttemperatur erwärmbar und/oder zumindest auf dieser Mindesttemperatur haltbar. Somit ist der und/oder ein Temperaturunterschied zwischen den Wärmespeichern erzwingbar. Insbesondere stellen die Heizvorrichtungen sicher, dass die Übertragung der Kompressionswärme in die Wärmespeicher auf den oder im Bereich der gewünschten Mindesttemperaturniveaus erfolgt. Vorteilhaft weisen die Temperaturen und/oder Mindesttemperaturen der Wärmspeicher in der Wärmespeicherreihenfolge ein Gefälle auf. Die Heizvorrichtung oder jede der Heizvorrichtungen ist insbesondere als elektrische Heizvorrichtung ausgebildet.

Bevorzugt weist jeder Wärmespeicher ein Wärmespeichermedium auf, in welchem insbesondere ein Teil der Kompressionswärme speicherbar ist. Vorzugsweise ist jedes der Wärmspeichermedien flüssig. Vorteilhaft sind die Wärmespeicher passiv. Darunter ist insbesondere zu verstehen, dass das Wärmespeichermedium jedes Wärmespeichers nicht zirkuliert und/oder umgewälzt wird. Bevorzugt erfolgt der Eintrag der Kompressionswärme in die Wärmespeichermedien, insbesondere ausschließlich oder vornehmlich, durch Konvektion.

Gemäß einer Ausgestaltung beträgt die vorgegebene Mindesttemperatur des reihenfolgenersten Wärmspeichers 100°C, näherungsweise 100°C, wenigstens 100°C und/oder mehr als 100°C. Insbesondere ist das Wärmespeichermedium des reihenfolgenersten Wärmspeichers Glycerin (auch Glycerol genannt). Bevorzugt wird ausschließlich Glycerin als Wärmespeichermedium des reihenfolgenersten Wärmspeichers verwendet. Glycerin (Summenformel: C₃H₈O₃) fällt z.B. als Abfallprodukt bei der Herstellung von Biotreibstoff an und ist somit relativ kostengünstig erhältlich.

Entscheidend für die Eignung als Wärmespeichermedium auf Basis der grundlegenden Gleichung Q = m*c_{p*}ΔT = ρ*c_{p*}V *ΔT ist das Produkt c_{p*}ρ, also Wärmekapazität mal Dichte, welches für Glycerin (3,06*10⁶ J/m³K) mehr als doppelt so hoch ist wie für Silikonöl (1,50*10⁶ J/m³K) und in etwa 70% des Wertes für Wasser erreicht, der außergewöhnlich hoch ist (4,40*10⁶ J/m³K). Dabei bezeichnen Q die dem Wärmespeichermedium zugeführte oder entzogene Wärmemenge, m die Masse des Wärmespeichermediums, cₚ die Wärmekapazität des Wärmespeichermediums, ρ die Dichte des Wärmespeichermediums und ΔT die Differenz von Anfangs- und Endtemperatur des Wärmespeichermediums. Die Wärmeleitfähigkeit von Glycerin (0,286 W/mK) ist ebenfalls etwa doppelt so hoch wie für Silikonöl. Daher ist das vergleichsweise umweltfreundliche Glycerin ein relativ gut geeignetes Wärmespeichermedium.

Die maximale Temperatur des reihenfolgenersten Wärmspeichers und/oder des Wärmespeichermedium des reihenfolgenersten Wärmspeichers liegt insbesondere unter 200°C. Einerseits liegt diese maximale Temperatur unter dem Siedepunkt von Glycerin (Siedepunkt von Glycerin = 290°C), andererseits tritt unterhalb einer Temperatur von 200°C keine Umwandlung von Glycerin in das giftige Acrolein (auch Acrylaldehyd genannt, Summemformel: C₂H₄O) ein.

Gemäß einer Weiterbildung weisen die Wärmespeicher jeweils einen Wärmespeicherbehälter auf, in den das jeweilige Wärmspeichermedium eingebracht ist. Jeder der Wärmespeicherbehälter kann offen oder geschlossen ausgebildet sein.

Bevorzugt ist der Wärmespeicherbehälter des reihenfolgenersten Wärmspeichers oder zumindest der Wärmespeicherbehälter des reihenfolgenersten Wärmspeichers geschlossen ausgebildet. Hierdurch kann einer ab ca. 150°C eintretenden Rauch- und/oder Dampfentwicklung von Glycerin begegnet werden. Durch die Heizvorrichtung und/oder durch das Einhalten der Mindesttemperatur des reihenfolgenersten Wärmspeichers kann insbesondere ferner sichergestellt werden, dass der relativ hohe Schmelzpunkt von Glycerin (Schmelzpunkt von Glycerin = 18°C) im Betrieb nicht unterschritten wird.

Jeder Wärmespeicher und/oder Wärmespeicherbehälter umfasst bevorzugt eine, wenigstens eine oder genau eine Gaszuleitung je Kompressionsstufe. Vorzugsweise verlaufen die Gaszuleitungen durch den jeweiligen Wärmespeicher und/oder Wärmespeicherbehälter hindurch und sind dabei insbesondere von dem jeweiligen Wärmespeichermedium umgeben. Beispielsweise verlaufen die Gaszuleitungen in dem jeweiligen Wärmespeicher und/oder Wärmespeicherbehälter jeweils mäanderförmig, helix- oder schraubenförmig oder geradlinig. Insbesondere sind die Gaszuleitungen jeder Kompressionsstufe in Reihe geschaltet, vorzugsweise in der Wärmespeicherreihenfolge. Bevorzugt ist die Reihenschaltung aus den Gaszuleitungen jeder Kompressionsstufe in den Gasströmungspfad der jeweiligen Kompressionsstufe geschaltet. Die Gaszuleitungen jedes Wärmespeichers und/oder Wärmespeicherbehälters sind insbesondere in dem jeweiligen Wärmspeichermedium angeordnet. Durch die Gaszuleitungen jedes Wärmespeichers und/oder Wärmespeicherbehälters ist insbesondere Wärme zwischen dem Gas und dem jeweiligen Wärmespeichermedium austauschbar.

Bevorzugt weist die Wärmespeicheranordnung zwei, wenigstens zwei, drei oder wenigstens drei Wärmespeicher auf. Die vorgegebene Mindesttemperatur des oder jedes dem reihenfolgenersten Wärmspeicher nachgeschalteten Wärmespeichers beträgt bevorzugt weniger als 100°C. Insbesondere ist das Wärmespeichermedium des oder jedes dem reihenfolgenersten Wärmspeicher nachgeschalteten Wärmespeichers Wasser oder Glycerin.

Die Wärmespeicher sind insbesondere drucklos. Darunter ist zu verstehen, dass die Wärmespeicher und/oder die Wärmespeichermedien insbesondere Umgebungsdruck aufweisen ("drucklos" im Sinne von "ohne Überdruck" gegenüber der Umgebung).

Jeder Wärmespeicher kann z.B. über die Menge und/oder den Füllstand seines Wärmespeichermediums in seiner Wärmekapazität auf ein gewünschtes Maß eingestellt werden. Insbesondere ist die Wärmekapazität jedes Wärmespeichers durch Zugabe und/oder Entnahme des jeweiligen Wärmespeichermediums erhöhbar und/oder verringerbar. Beispielsweise kann somit die Betriebstemperatur des jeweiligen Wärmespeichers je nach Bedarf gesenkt und/oder erhöht werden.

Gemäß einer Weiterbildung ist das Gas Luft. Luft steht auf der Erde in der Regel überall zur Verfügung. Das komprimierte Gas kann somit auch als Druckluft bezeichnet werden. Ferner können die Verdichter auch als Druckluftkompressoren und/oder der Druckbehälter auch als Druckluftbehälter bezeichnet werden.

Jeder Verdichter ist ausgangsseitig insbesondere an den Gasströmungspfad der jeweiligen Kompressionsstufe angeschlossen. Bevorzugt ist der Gasströmungspfad der reihenletzten Kompressionsstufe ausgangsseitig an den Druckbehälter und/oder an einen Eingang des Druckbehälters angeschlossen. Der Verdichter einer reihenersten der Kompressionsstufen ist eingangsseitig vorzugsweise an ein Luft- oder Gasreservoir angeschlossen oder zur Umgebung hin offen. Bevorzugt ist der reihenersten Kompressionsstufe aber wenigstens eine Gas- oder Luftaufbereitungsvorrichtung vorgeschaltet, die z.B. einen Gas- oder Luftfilter und/oder einen Entfeuchter umfasst.

Gemäß einer Ausgestaltung ist in den Gasströmungspfad der reihenletzten Kompressionsstufe zwischen die Wärmespeicheranordnung und den Druckbehälter eine Kältespeichervorrichtung geschaltet. Mittels der Kältespeichervorrichtung ist vorzugsweise das dem Druckbehälter zugeführte Gas abkühlbar, insbesondere bis unter die Umgebungstemperatur. Durch das Abkühlen des dem Druckbehälter zugeführten Gases ist diesem Feuchtigkeit entziehbar und/oder Feuchtigkeit aus diesem auskondensierbar. Dies ist vorteilhaft, da dem Druckbehälter somit möglichst wenig Feuchtigkeit zugeführt wird. Die Kältespeichervorrichtung umfasst bevorzugt ein Kühlmittel, durch welches dem dem Druckbehälter zugeführten Gas Wärme entziehbar ist. Ferner umfasst die Kältespeichervorrichtung bevorzugt eine Umwälzpumpe, mittels welcher insbesondere das Kühlmittel umwälzbar ist.

Der Pfad, den das Gas durch die Verdichter hindurch, insbesondere unter Zwischenschaltung der Wärmespeicheranordnung und/oder der Wärmespeicher, bis zu dem Druckbehälter durchströmt und/oder der Pfad, der durch die Verdichter hindurch, insbesondere unter Zwischenschaltung der Wärmespeicheranordnung und/oder der Wärmespeicher, bis zu dem Druckbehälter von dem Gas durchströmbar ist, wird vorzugsweise auch als Kompressionspfad bezeichnet.

Gemäß einer Ausgestaltung bildet oder bilden die oder mehrere der oder wenigstens einer der Verdichter insbesondere auch eine oder jeweils auch eine Expansionsvorrichtung, mittels welcher das Gas expandierbar ist. Vorzugsweise bildet die oder jede Kompressionsstufe, deren Verdichter auch als Expansionsvorrichtung ausgebildet ist, auch eine Expansionsstufe. Ein auch als Expansionsvorrichtung ausgebildeter Verdichter wird z.B. als kombinierte Kompressions- und Expansionsmaschine bezeichnet. Eine kombinierte Kompressions- und Expansionsmaschine umfasst beispielsweise einen im Zylinderkopf umgebauten Zweitakt-Dieselmotor, der zur Speicherung bzw. Kompression von einem Elektromotor angetrieben als Kompressor arbeitet und Druckluft erzeugt. Bei der Rückspeisung bzw. Expansion arbeitet er als Druckluftmotor und der Elektromotor wird insbesondere zu einem elektrischen Generator. Dies erlaubt simple und kompakte Systeme. Auch Turbinen-Kompressoren sind realisierbar.

Gemäß einer Weiterbildung weist die erfindungsgemäße Vorrichtung die oder wenigstens eine Expansionsvorrichtung, mittels welcher das Gas expandierbar ist, und die oder wenigstens eine Expansionsstufe auf, welche die Expansionsvorrichtung und einen dieser vorgeschalteten Gasströmungspfad umfasst, wobei der Expansionsstufe der Druckbehälter vorgeschaltet ist, die Wärmespeicheranordnung in den Gasströmungspfad der Expansionsstufe geschaltet ist und die Wärmespeicher von dem Gasströmungspfad der Expansionsstufe, insbesondere bezüglich der Gasströmungsrichtung, in der umgekehrten Wärmespeicherreihenfolge nacheinander durchlaufen sind oder werden. Bevorzugt ist das der Expansionsvorrichtung zugeführte Gas somit durch die Wärmespeicher, insbesondere stufenweise, erwärmbar.

Vorteilhaft weist die erfindungsgemäße Vorrichtung aber die oder mehrere Expansionsvorrichtungen, mittels welchen das Gas expandierbar ist, und die oder mehrere in Reihe geschaltete Expansionsstufen auf, die jeweils eine der Expansionsvorrichtungen und einen dieser vorgeschalteten Gasströmungspfad umfassen, wobei einer reihenersten der Expansionsstufen der Druckbehälter vorgeschaltet ist, die Wärmespeicheranordnung in den Gasströmungspfad jeder Expansionsstufe geschaltet ist und die Wärmespeicher von dem Gasströmungspfad jeder Expansionsstufe, insbesondere bezüglich der jeweiligen Gasströmungsrichtung, in der umgekehrten Wärmespeicherreihenfolge nacheinander durchlaufen sind oder werden. Bevorzugt ist das jeder Expansionsvorrichtung zugeführte Gas somit durch die Wärmespeicher, insbesondere stufenweise, erwärmbar.

Gemäß einer ersten Variante bildet oder bilden die oder mehrere der oder wenigstens einer der Verdichter insbesondere auch die oder jeweils auch eine der Expansionsvorrichtungen (wie oben bereits angesprochen). Hierdurch kann Material eingespart werden. Gemäß einer zweiten Variante bilden die Verdichter und die Expansionsvorrichtung oder Expansionsvorrichtungen insbesondere voneinander getrennte und/oder unterschiedliche Vorrichtungen und/oder Maschinen. Somit können die jeweiligen Vorrichtungen und/oder Maschinen auf ihre jeweilige Aufgabe hin optimiert ausgelegt werden.

Der Pfad, den das Gas von dem Druckbehälter aus, insbesondere unter Zwischenschaltung der Wärmespeicheranordnung und/oder der Wärmespeicher, bis durch die Expansionsvorrichtung oder Expansionsvorrichtungen hindurch durchströmt und/oder der Pfad, der von dem Druckbehälter aus, insbesondere unter Zwischenschaltung der Wärmespeicheranordnung und/oder der Wärmespeicher, bis durch die Expansionsvorrichtung oder Expansionsvorrichtungen hindurch von dem Gas durchströmbar ist, wird vorzugsweise auch als Expansionspfad bezeichnet.

Gemäß einer ersten Alternative stimmt der Expansionspfad ganz oder teilweise oder zumindest teilweise mit dem Kompressionspfad überein, insbesondere wenn wenigstens einer der Verdichter als Expansionsvorrichtung ausgebildet ist. Gemäß einer zweiten Alternative ist der Expansionspfad von dem Kompressionspfad getrennt, insbesondere wenn die Verdichter und die Expansionsvorrichtung oder Expansionsvorrichtungen voneinander getrennte und/oder unterschiedliche Vorrichtungen und/oder Maschinen bilden.

Da das Gas beim Expandieren abkühlt, kann die Expansionsvorrichtung oder können die Expansionsvorrichtungen vereisen. Durch die der oder jeder Expansionsvorrichtung vorgeschaltete Wärmespeicheranordnung wird das Gas zuvor erwärmt, sodass einer Vereisung entgegen gewirkt werden kann.

Die Anzahl der Expansionsstufen beträgt bevorzugt eins, wenigstens eins, zwei oder wenigstens zwei. Insbesondere entspricht die Anzahl der Expansionsstufen der Anzahl der Expansionsvorrichtungen. Vorzugsweise umfasst jede Expansionsstufe genau eine der Expansionsvorrichtungen. Bevorzugt ist jede Expansionsvorrichtung genau einer der Expansionsstufen zugeordnet und/oder in dieser vorgesehen. Die Wärmespeicheranordnung und/oder die Wärmespeicher umfassen insbesondere keine Expansionsvorrichtungen. Vorzugsweise ist die Anzahl der Expansionsstufen kleiner oder gleich der Anzahl der Kompressionsstufen .

Gemäß einer ersten Alternative umfasst jeder Wärmespeicher und/oder Wärmespeicherbehälter bevorzugt eine, wenigstens eine oder genau eine Gasrückleitung. Insbesondere sind die Gasrückleitungen in Reihe geschaltet, vorzugsweise in der umgekehrten Wärmspeicherreihenfolge. Bevorzugt ist die Reihenschaltung aus den Gasrückleitungen in den Gasströmungspfad der Expansionsstufe geschaltet.

Gemäß einer zweiten Alternative umfasst jeder Wärmespeicher und/oder Wärmespeicherbehälter bevorzugt eine, wenigstens eine oder genau eine Gasrückleitung je Expansionsstufe. Insbesondere sind die Gasrückleitungen jeder Expansionsstufe in Reihe geschaltet, vorzugsweise in der umgekehrten Wärmspeicherreihenfolge. Bevorzugt ist die Reihenschaltung aus den Gasrückleitungen jeder Expansionsstufe in den Gasströmungspfad der jeweiligen Expansionsstufe geschaltet.

Gemäß einer ersten Variante sind die Gasrückleitungen mit den Gaszuleitungen insbesondere ganz oder teilweise oder zumindest teilweise identisch. Gemäß einer zweiten Variante handelt es sich bei den Gasrückleitungen insbesondere um von den Gaszuleitungen getrennte Leitungen.

Die Gasrückleitungen verlaufen vorzugsweise durch den jeweiligen Wärmespeicher und/oder Wärmespeicherbehälter hindurch und sind dabei insbesondere von dem jeweiligen Wärmespeichermedium umgeben. Beispielsweise verlaufen die Gasrückleitungen in dem jeweiligen Wärmespeicher und/oder Wärmespeicherbehälter jeweils mäanderförmig, helix- oder schraubenförmig oder geradlinig. Die Gasrückleitung oder Gasrückleitungen jedes Wärmespeichers und/oder Wärmespeicherbehälters ist oder sind insbesondere in dem jeweiligen Wärmspeichermedium angeordnet und/oder von diesem umgeben. Durch die Gasrückleitung oder Gasrückleitungen jedes Wärmespeichers und/oder Wärmespeicherbehälters ist insbesondere Wärme zwischen dem Gas und dem jeweiligen Wärmespeichermedium austauschbar.

Die Expansionsvorrichtung oder jeder Expansionsvorrichtung ist bevorzugt eine Expansionsmaschine. Beispielsweise ist die Expansionsvorrichtung oder jede Expansionsvorrichtung eine Turbine, ein Schraubenexpander oder eine Kolbenmaschine.

Jede Expansionsvorrichtung ist eingangsseitig insbesondere an den Gasströmungspfad der jeweiligen Expansionsstufe angeschlossen. Bevorzugt ist der Gasströmungspfad der reihenersten Expansionsstufe eingangsseitig insbesondere an den Druckbehälter und/oder an einen Ausgang des Druckbehälters angeschlossen. Die Expansionsvorrichtung einer reihenletzten der Expansionsstufen ist ausgangsseitig vorzugsweise an ein Luft- oder Gasreservoir angeschlossen oder zur Umgebung hin offen.

Der Eingang und der Ausgang des Druckbehälters sind insbesondere unterschiedlich. Gemäß einer Alternative ist der Eingang des Druckbehälters z.B. mit dem Ausgang des Druckbehälters identisch, insbesondere wenn wenigstens einer der Verdichter auch als Expansionsvorrichtung ausgebildet ist.

Bevorzugt ist die Expansionsvorrichtung oder sind die Expansionsvorrichtungen mit wenigstens einer Maschine, insbesondere mechanisch, gekoppelt. Mittels der Expansionsvorrichtung oder der Expansionsvorrichtungen ist vorzugsweise die wenigstens eine Maschine antreibbbar. Vorteilhaft ist jede der Expansionsvorrichtungen mit einer Maschine, insbesondere mechanisch, gekoppelt, die insbesondere durch die jeweilige Expansionsvorrichtung antreibbar ist. Die wenigstens eine oder die Maschinen sind oder umfassen insbesondere wenigstens einen oder mehrere elektrische Generatoren. Mittels des wenigstens einen oder der elektrischen Generatoren ist insbesondere elektrische Energie und/oder elektrischer Strom erzeugbar.

Die elektrische Heizvorrichtung oder die elektrischen Heizvorrichtungen können z.B. elektrisch mit dem oder den Generatoren verbunden oder verbindbar sein. Insbesondere sind die elektrische Heizvorrichtung oder die elektrischen Heizvorrichtungen von dem oder den Generatoren mit elektrischer Energie versorgbar. Bevorzugt können die elektrische Heizvorrichtung oder die elektrischen Heizvorrichtungen als Lastwiderstand oder Lastwiderstände für den oder die Generatoren dienen.

Die in der erfindungsgemäßen Vorrichtung in Form von komprimiertem Gas und Wärme gespeicherte Energie kann somit zum Verrichten von Arbeit und/oder zum Erzeugen von elektrischer Energie genutzt werden. Die erfindungsgemäße Vorrichtung ist oder bildet, insbesondere wenn sie die Expansionsvorrichtung oder die Expansionsvorrichtungen aufweist, vorzugsweise ein Druckluftspeicherkraftwerk oder einen Teil desselben.

Bevorzugt ist der Druckbehälter durch die Verdichter und/oder Kompressionsstufen mit dem Gas befüllbar. Insbesondere wird, vorzugsweise in einer ersten Prozessstufe, der Druckbehälter durch die Kompressionsstufen mit dem Gas befüllt. Ferner ist der Druckbehälter bevorzugt durch die Expansionsstufe oder die Expansionsstufen entleerbar. Insbesondere wird, vorzugsweise in einer zweiten Prozessstufe, der Druckbehälter durch die Expansionsstufe oder die Expansionsstufen entleert. Gemäß einer Ausgestaltung wird der Druckbehälter in der ersten Prozessstufe mit komprimiertem Gas befüllt, bevor das in dem Druckbehälter gespeicherte, komprimierte Gas in der zweiten Prozessstufe expandiert wird. Insbesondere laufen die Prozessstufen nicht gleichzeitig, sondern nacheinander ab. Beispielsweise kann zwischen den Prozessstufen ein längerer Zeitraum von z.B. mehreren Stunden liegen. Vorzugswiese sind die Kompressionsstufen nicht zeitgleich mit der Expansionsstufe oder den Expansionsstufen, sondern nacheinander im Betrieb.

In der ersten Prozessstufe verringert die Druckminderung des Gases durch den durch die Wärmespeicheranordnung bewirkten Wärmeentzug beim Befüllen des Druckbehälters insbesondere den Druck des Gases im Druckbehälter und somit den Widerstand, gegen den die Verdichter arbeiten müssen. In der zweiten Prozessstufe erhöht die durch die Wärmespeicheranordnung bewirkte Wärmezufuhr beim Entleeren des Wärmespeichers bei der Expansion den effektiven Druck, wodurch der Druckbehälter insbesondere langsamer entleert wird und der gespeicherte Gasvorrat länger reicht.

Bevorzugt ist zwischen der reihenletzten Kompressionsstufe und dem Druckbehälter ein oder ein erster Absperrhahn geschaltet, mittels welchem der Druckbehälter gegenüber den Kompressionsstufen absperrbar ist. Vorzugsweise ist zwischen den Druckbehälter und der Expansionsstufe oder der reihenersten Expansionsstufe ein oder ein zweiter Absperrhahn geschaltet, mittels welchem der Druckbehälter gegenüber der Expansionsstufe oder den Expansionsstufen absperrbar ist. Bevorzugt ist zwischen der reihenletzten Kompressionsstufe und dem Druckbehälter ein oder ein erstes Rückschlagventil geschaltet, mittels welchem ein Zurückströmen von Gas aus dem Druckbehälter in die Kompressionsstufen verhinderbar ist. Vorzugsweise ist zwischen den Druckbehälter und der Expansionsstufe oder der reihenersten Expansionsstufe ein oder ein zweites Rückschlagventil geschaltet, mittels welchem ein Ausströmen von Gas aus dem Druckbehälter zu der oder den Expansionsstufen ermöglichbar ist oder ermöglicht wird. Ist der Ausgang des Druckbehälters mit dem Eingang des Druckbehälters identisch, ist bevorzugt das erste Rückschlagventil mit dem ersten Absperrhahn in Reihe geschaltet, und das zweite Rückschlagventil ist bevorzugt mit dem zweiten Absperrhahn in Reihe geschaltet, wobei diese beiden Reihenschaltungen insbesondere zueinander parallel geschaltet sind. Dabei sind die Rückschlagventile vorzugsweise gegenläufig und/oder einander entgegengesetzt geschaltet und/oder ausgerichtet.

Gemäß einer Weiterbildung ist die Kältespeichervorrichtung ferner jeder der Expansionsvorrichtungen nachgeschaltet und vorzugsweise durch die Kälte des expandierten Gases abkühlbar. Durch das Abkühlen der Kältespeichervorrichtung ist z.B. das dem Druckbehälter zugeführte Gas durch die Kältespeichervorrichtung abkühlbar. Insbesondere ist dem Kühlmittel durch das expandierte Gas Wärme entziehbar. Bevorzugt ist die Kältespeichervorrichtung zusätzlich in den Gasströmungspfad der reihenersten Expansionsstufe vor die Wärmespeicheranordnung geschaltet, sodass das den Expansionsstufen zugeführte Gas mittels der Kältespeichervorrichtung vorerwärmbar ist. Insbesondere ist durch das Kühlmittel dem den Expansionsstufen zugeführten Gas Wärme zuführbar. Dies ist z.B. möglich, nachdem die Kältespeichervorrichtung und/oder deren Kühlmittel durch das Kühlen des dem Druckbehälter zugeführten Gases erwärmt wurde. Somit ist die dem dem Druckbehälter zugeführten Gas entzogene Wärme zum Vorerwärmen des den Expansionsstufen zugeführten Gases nutzbar. Die Kältespeichervorrichtung weist z.B. einen Stirling-Motor auf, mittels welchem die Umwälzpumpe der Kältespeichervorrichtung antreibbar ist, insbesondere ohne zusätzliche Energie zum Betreiben der Umwälzpumpe zuführen zu müssen. Die Kältespeichervorrichtung wird z.B. auch als Hypokühler bezeichnet.

Bevorzugt nutzt die Kältespeichervorrichtung, insbesondere als Niedrigtemperatur-Wärmespeicher, die Kälte des expandierten Gases hinter den Expansionsvorrichtungen zunächst zur Temperaturerniedrigung des Kühlmittels. Dieses entzieht dem komprimierten Gas dann Wärme (insbesondere Restwärme) hinter der Wärmespeicheranordnung und kühlt das komprimierte Gas auf diese Weise ab, insbesondere bis unter die Umgebungstemperatur. Dadurch wird das komprimierte Gas noch zusätzlich entfeuchtet, bevor es in den Druckbehälter gelangt. Umgekehrt wird das komprimierte Gas bei der Expansion und/oder Rückspeisung in der Kältespeichervorrichtung, vorzugsweise in zwei Stufen, bereits vorgewärmt, bevor es die Wärmespeicheranordnung durchläuft und zu den Expansionsvorrichtungen gelangt. Bevorzugt ist das Kühlmittel der Kältespeichervorrichtung ferner zur Kühlung wenigstens einer oder mehrerer elektrischer Rückspeiseeinheiten nutzbar, die insbesondere elektrisch dem wenigstens einen oder den elektrischen Generatoren nachgeschaltet sind und z.B. wenigstens einen oder mehrere elektrische Stromumrichter umfassen. Der Einsatz der Kältespeichervorrichtung ist besonders günstig, da insbesondere die Abkälte der Expansionsvorrichtung oder Expansionsvorrichtungen ausgenutzt werden kann.

Unter dem Begriff Gasströmungspfad wird insbesondere ein Gegenstand oder eine Anordnung von Gegenständen verstanden, durch welchen oder welche Gas geleitet werden kann und/oder mittels welchem oder welcher eine gasleitende Verbindung hergestellt werden kann. Beispielsweise ist oder umfasst jeder der Gasströmungspfade eine Gasleitung oder eine Reihenschaltung von Gasleitungen.

Gemäß einer Ausgestaltung ist es möglich, dass die oder wenigstens eine der Expansionsvorrichtungen auch einen der Verdichter bildet und/oder die oder zumindest eine der Expansionsstufen auch eine der Kompressionsstufen bildet. Ferner ist es möglich, dass jede Expansionsvorrichtung auch einen der Verdichter bildet und/oder jede Expansionsstufe auch eine der Kompressionsstufen bildet.

Die Erfindung betrifft ferner ein Verfahren zum vorübergehenden Speichern von Gas und Wärme, wobei ein Gas in mehreren Kompressionsstufen nacheinander komprimiert und anschließend in einem oder wenigstens einem Druckbehälter gespeichert wird, durch das Komprimieren des Gases erzeugte Kompressionswärme nach jeder Kompression in mehreren Wärmespeichern gespeichert wird, und wobei den Wärmespeichern eine Wärmespeicherreihenfolge zugeordnet ist oder wird und das Gas nach jeder Kompression die Wärmespeicher in der Wärmespeicherreihenfolge nacheinander durchläuft, sodass die Kompressionswärme, insbesondere stufenweise, an die Wärmespeicher abgegeben wird.

Das erfindungsgemäße Verfahren wird bevorzugt mit der erfindungsgemäßen Vorrichtung durchgeführt. Vorzugsweise wird die erfindungsgemäße Vorrichtung zur Durchführung des erfindungsgemäßen Verfahrens verwendet. Das erfindungsgemäße Verfahren ist insbesondere gemäß allen im Zusammenhang mit der erfindungsgemäßen Vorrichtung erläuterten Ausgestaltungen weiterbildbar. Ferner ist die erfindungsgemäße Vorrichtung gemäß allen im Zusammenhang mit dem erfindungsgemäßen Verfahren erläuterten Ausgestaltungen weiterbildbar.

Erfindungsgemäss wird jedem Wärmespeicher eine vorgegebene Mindesttemperatur zugeordnet und mittels wenigstens einer Heizvorrichtung wird jeder Wärmespeicher zumindest auf der ihm zugeordneten Mindesttemperatur gehalten, wobei die den Wärmespeichern zugeordneten Mindesttemperaturen in der Wärmespeicherreihenfolge abnehmen.

Jede Kompressionsstufe umfasst bevorzugt einen Verdichter. Beispielsweise ist jeder Verdichter ein Turboverdichter, ein Schraubenverdichter oder ein Kolbenverdichter. Jeder Verdichter komprimiert insbesondere das Gas in der jeweiligen Kompressionsstufe.

Gemäß einer Ausgestaltung wird das in dem Druckbehälter gespeicherte Gas in wenigstens einer Expansionsstufe expandiert, wobei das Gas vor der Expansion die Wärmespeicher in der umgekehrten Wärmespeicherreihenfolge nacheinander durchläuft und dadurch, insbesondere stufenweise, erwärmt wird. Bevorzugt wird das in dem Druckbehälter gespeicherte Gas aber in mehreren Expansionsstufen nacheinander expandiert, wobei das Gas vor jeder Expansion die Wärmespeicher in der umgekehrten Wärmespeicherreihenfolge nacheinander durchläuft und dadurch, insbesondere stufenweise, erwärmt wird.

Die oder jede Expansionsstufe umfasst bevorzugt eine Expansionsvorrichtung. Die oder jede Expansionsvorrichtung ist z.B. eine Expansionsmaschine, beispielsweise eine Turbine oder Kolbenmaschine. Die oder jede Expansionsmaschine wird insbesondere durch das in der oder der jeweiligen Expansionsstufe expandierende Gas angetrieben.

Gemäß einer ersten Variante bildet oder bilden die oder mehrere der oder wenigstens eine der Kompressionsstufen insbesondere auch die oder jeweils auch eine der Expansionsstufen. Gemäß einer zweiten Variante sind die Kompressionsstufen insbesondere von oder zu der Expansionsstufe oder den Expansionsstufen getrennt und/oder unterschiedlich.

Vorzugsweise werden durch das expandierende Gas und/oder durch die Expansionsvorrichtung oder Expansionsvorrichtungen wenigstens eine oder mehrere Maschinen, insbesondere mechanisch, angetrieben. Die wenigstens eine oder die Maschinen sind oder umfassen insbesondere wenigstens einen oder mehrere elektrische Generatoren. Der wenigstens eine oder die elektrischen Generatoren erzeugen insbesondere elektrische Energie und/oder elektrischen Strom.

Bevorzugt wird, vorzugsweise in der oder einer ersten Prozessstufe, der Druckbehälter durch die Kompressionsstufen mit dem Gas befüllt. Ferner wird, vorzugsweise in der oder einer zweiten Prozessstufe, der Druckbehälter durch die Expansionsstufe oder die Expansionsstufen entleert. Insbesondere wird der Druckbehälter in der ersten Prozessstufe mit komprimiertem Gas befüllt, bevor das in dem Druckbehälter gespeicherte, komprimierte Gas in der zweiten Prozessstufe expandiert wird. Bevorzugt laufen die Prozessstufen nicht gleichzeitig, sondern nacheinander ab. Vorteilhaft läuft die zweite Prozessstufe nach der ersten Prozessstufe ab.

Gemäß einer Ausgestaltung wird das dem Druckbehälter zugeführte Gas nach dem letzten Wärmespeicherdurchlauf durch ein Kühlmittel abgekühlt, insbesondere bis unter die Umgebungstemperatur. Hierdurch kann dem dem Druckbehälter zugeführten Gas Feuchtigkeit entzogen und/oder aus diesem auskondensiert werden.

Gemäß einer Weiterbildung wird das Kühlmittel nach jeder Expansion durch die Kälte des expandierten Gases abgekühlt. Durch das Abkühlen des Kühlmittels kann z.B. das dem Druckbehälter zugeführte Gas durch das Kühlmittel abgekühlt werden. Bevorzugt wird zusätzlich das der oder der ersten Expansionsstufe zugeführte Gas vor dem oder vor dem ersten Wärmespeicherdurchlauf mittels des Kühlmittels vorerwärmt. Dies ist z.B. möglich, nachdem das Kühlmittel durch das Kühlen des dem Druckbehälter zugeführten Gases erwärmt wurde. Somit kann die dem dem Druckbehälter zugeführten Gas entzogene Wärme zum Erwärmen des der oder den Expansionsstufen zugeführten Gases genutzt werden.

Die Erfindung wird nachfolgend anhand einer bevorzugten Ausführungsform unter Bezugnahme auf die Zeichnung beschrieben. In der Zeichnung zeigt:

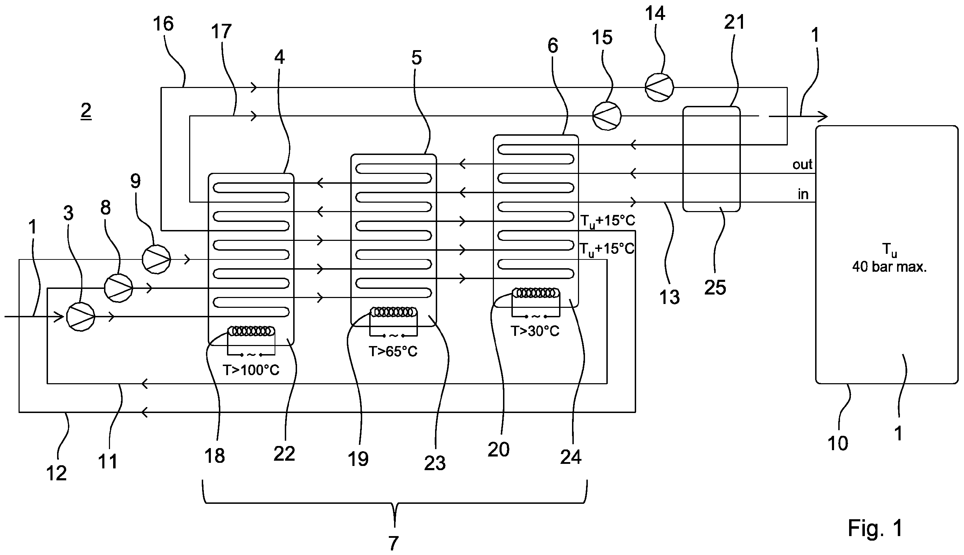

Fig. 1 eine schematische Darstellung einer Vorrichtung gemäß einer Ausführungsform der Erfindung.

Aus Fig. 1 eine schematische Darstellung einer Vorrichtung gemäß einer Ausführungsform der Erfindung ersichtlich, wobei Luft 1 aus der Umgebung 2 mittels eines ersten Verdichters 3 komprimiert wird, die anschließend nacheinander mehrere Wärmespeicher 4, 5 und 6 einer Wärmespeicheranordnung 7 durchläuft. Danach wird die Luft 1 von einem zweiten Verdichter 8 zusätzlich komprimiert und durchläuft anschließend nacheinander die Wärmespeicher 4, 5 und 6. Nachfolgend wird die Druckluft von einem dritten Verdichter 9 noch weiter komprimiert und durchläuft anschließend nacheinander die Wärmespeicher 4, 5 und 6. Anschließend wird die Luft 1 in einem Druckbehälter 10 gespeichert. Die jeweilige Strömungsrichtung der Luft 1 ist durch Pfeile bzw. Pfeilspitzen dargestellt. Die Verdichter 3, 8 und 9 werden auch als Kompressoren bezeichnet.

Jedem Kompressor ist ein Gasströmungspfad nachgeschaltet, der zusammen mit dem jeweiligen Kompressor eine Kompressionsstufe bildet. Dabei ist dem Kompressor 3 der Gasströmungspfad 11 nachgeschaltet, dem Kompressor 8 ist der Gasströmungspfad 12 nachgeschaltet und dem Kompressor 9 ist der Gasströmungspfad 13 nachgeschaltet. Der Gasströmungspfad 11 verbindet den Ausgang des Kompressors 3 mit dem Eingang des Kompressors 8, der Gasströmungspfad 12 verbindet den Ausgang des Kompressors 8 mit dem Eingang des Kompressors 9 und der Gasströmungspfad 13 verbindet den Ausgang des Kompressors 9 mit dem Eingang "in" des Druckbehälters 10. Der Eingang des Kompressors 3 ist zur Umgebung hin offen. In jeden dieser Gasströmungspfade ist die Wärmespeicheranordnung 7 geschaltet, wobei die Wärmespeicher 4, 5 und 6 in Strömungsrichtung der Luft 1 in jedem der Gasströmungspfade 11, 12 und 13 dieselbe Reihenfolge aufweisen.

Ist der Druckbehälter 10 ausreichend gefüllt, kann die in ihm gespeicherte und unter Druck stehende Luft 1 dazu verwendet werden, eine oder mehrere Expansionsvorrichtungen in Form von Turbinen 14 und 15 anzutreiben. Dazu durchläuft die im Druckbehälter 10 gespeicherte Luft nacheinander die Wärmespeicher 6, 5 und 4 und wird der ersten Turbine 14 zugeführt. Danach durchläuft die Druckluft erneut nacheinander die Wärmespeicher 6, 5 und 4 und wird der zweiten Turbine 15 zugeführt. Nach der zweiten Turbine 15 wird die Luft 1 an die Umgebung 2 abgegeben.

Jeder Turbine ist ein Gasströmungspfad vorgeschaltet, der zusammen mit der jeweiligen Turbine eine Expansionsstufe bildet. Dabei ist der Turbine 14 der Gasströmungspfad 16 vorgeschaltet und der Turbine 15 ist der Gasströmungspfad 17 vorgeschaltet. Der Gasströmungspfad 16 verbindet den Ausgang "out" des Druckbehälters 10 mit dem Eingang der Turbine 14 und der Gasströmungspfad 17 verbindet den Ausgang der Turbine 14 mit dem Eingang der Turbine 15. Der Ausgang der Turbine 15 ist zur Umgebung 2 hin offen. In jeden dieser Gasströmungspfade ist die Wärmespeicheranordnung 7 geschaltet, wobei die Wärmespeicher 6, 5 und 4 in Strömungsrichtung der Luft in jedem der Gasströmungspfade 16 und 17 dieselbe Reihenfolge aufweisen. Allerdings werden die Wärmespeicher in den Expansionsstufen von der Luft 1 in der umgekehrten Reihenfolge durchströmt wie in den Kompressionsstufen.

Der erläuterte Prozess läuft zweitstufig ab. In einer ersten Prozessstufe wird der Druckbehälter 10 mit Luft gefüllt. In einer nachfolgenden zweiten Prozessstufe wird der Druckbehälter 10 entleert und die in ihm gespeicherte Luft zum Antreiben der Turbinen 14 und 15 verwendet. Ist die Luft im Druckbehälter 10 erschöpft oder unterschreitet der Druck der Luft im Druckbehälter 10 einen Grenzwert, kann wieder zur ersten Prozessstufe zurückgekehrt werden usw. Die beiden Prozessstufen laufen somit nacheinander und nicht gleichzeitig ab.

Die Wärmespeicher 4, 5 und 6 weisen jeweils eine Heizvorrichtung 18, 19 und 20 auf, sodass die Wärmespeicher 4, 5 und 6 durch die Heizvorrichtungen 8, 19 und 20 auf Mindesttemperaturen gehalten werden, die in der Reihenfolge 4, 5 und 6 der Wärmespeicher abnehmen. Die Wärmespeicher weisen somit in der Reihenfolge 4, 5 und 6 eine abnehmende Temperatur auf. Dabei ist die Temperatur des Wärmespeichers 4 größer als die Temperatur des Wärmespeichers 5, die wiederum größer als die Temperatur des Wärmespeichers 6 ist. Ohne die Heizvorrichtungen könnten sich die Temperaturen der Wärmespeicher 4, 5 und 6 ausgleichen, z.B. mit der Umgebung. Ferner sind die Wärmespeicher 4, 5 und 6 jeweils mit einem Wärmespeichermedium 22, 23 und 24 gefüllt. Das Wärmespeichermedium 22 des ersten Wärmespeichers 4 ist insbesondere Glycerin, da die Temperatur des ersten Wärmspeichers 4 wenigstens 100°C beträgt. Die anderen Wärmespeicher 5 und 6 weisen eine Temperatur unter 100°C auf und sind mit Wasser als Wärmespeichermedium 23 bzw. 24 gefüllt.

Die von den Kompressoren 1, 8 und 9 verdichtete Luft wird durch das Verdichten erwärmt (Kompressionswärme). Dadurch, dass die Luft zum Befüllen des Druckbehälters 10 nach jeder Kompression nacheinander die Wärmespeicher 4, 5 und 6 durchläuft, wird die Kompressionswärme zumindest teilweise an die Wärmespeicher abgegeben und schrittweise in diesen gespeichert.

Bevor die in dem Druckbehälter 10 gespeicherte Luft der Turbine 14 zugeführt wird, durchläuft die Luft 1 nacheinander die Wärmespeicher 6, 5 und 4 und wird dabei schrittweise erwärmt. Anschließend wird die Druckluft der Turbine 15 zugeführt, durchläuft zuvor allerdings erneut nacheinander die Wärmespeicher 6, 5 und 4 und wird dabei schrittweise erwärmt. Die Erwärmung der Luft vor Eintritt in die Turbinen ist sinnvoll, damit die Turbinen nicht vereisen.

Zwischen den letzten Wärmespeicher 6 und den Druckbehälter 10 ist eine Kältespeichervorrichtung 21 geschaltet, die ein Kühlmittel 25 aufweist. Während des Befüllens des Druckbehälters 10 mit Luft kühlt das Kühlmittel 25 die nach der letzten Kompression aus dem Wärmespeicher 6 austretende Luft unter die Umgebungstemperatur ab, sodass Wasser aus der Luft auskondensieren kann und sich nicht im Druckbehälter 10 sammelt. Die Kältespeichervorrichtung 21 ist ferner jeder Turbine 14 und 15 nachgeschaltet, sodass im Betrieb der Turbinen 14 und 15 die aus den Turbinen ausströmende kalte Luft das Kühlmittel 25 kühlt. Das abgekühlte Kühlmittel 25 kann somit beim nächsten Befüllen des Druckbehälters 10 wieder zum Kühlen der dem Druckbehälter 10 zugeführten Luft genutzt werden. Durch dieses Kühlen des Kühlmittels 25 wird aber auch der aus den Turbinen ausströmenden Luft Wärme zugeführt, was zu einer Vorerwärmung der aus der Turbine 14 ausströmenden Luft führt. Die Kältespeichervorrichtung 21 ist ferner in den Gasströmungspfad 16 geschaltet und dabei der Wärmespeicheranordnung 7 vorgeschaltet. Somit kann das Kühlmittel 25 auch zur Vorerwärmung der aus dem Druckbehälter 10 austretenden Luft genutzt werden.

Sinn und Zweck der Vorrichtung ist es, durch herkömmliche Kraftwerke, wie z.B. Windkraftanlagen, erzeugte überschüssige elektrische Energie (d.h. Energie, die zum Zeitpunkt ihrer Erzeugung nicht benötigt wird), in Form von verdichtetem Gas (hier Druckluft) und Wärme vorübergehend zu speichern. Sollte zu einem späteren Zeitpunkt ein erhöhter Energiebedarf bestehen, kann die gespeicherte Energie wieder freigesetzt und zum Antreiben der Turbinen 14 und 15 genutzt werden. Die Turbinen 14 und 15 können wiederum elektrische Generatoren zur Erzeugung elektrischer Energie antreiben.

Ein Beispiel für mögliche Temperaturen und Drücke wird nachfolgend gegeben. Die Mindesttemperatur des ersten Wärmespeichers 4 beträgt 100°C. Die tatsächliche Temperatur des ersten Wärmespeichers 4 liegt zwischen 100°C und 120°C. Die Mindesttemperatur des zweiten Wärmespeichers 5 beträgt 65°C. Die tatsächliche Temperatur des zweiten Wärmespeichers 6 liegt zwischen 65°C und 90°C. Die Mindesttemperatur des dritten Wärmespeichers 6 beträgt 30°C. Die tatsächliche Temperatur des dritten Wärmespeichers 4 liegt zwischen 30°C und 60°C.

### Erste Prozessstufe:

Der erste Kompressor 3 komprimiert die Luft 1 aus der Umgebung auf 3,4 bar. Die komprimierte Luft weist aufgrund der Kompressionswärme dann eine Temperatur von 150°C auf. Danach durchläuft die Luft nacheinander die Wärmespeicher 4, 5 und 6. Da die Temperatur der komprimierten Luft vor Eintritt in die Wärmespeicher über den Temperaturen der Wärmespeicher liegt, gibt sie Wärme an die Wärmespeicher ab. Beim Austritt aus den Wärmespeichern liegt die Temperatur der Luft etwa um 15°C über der Umgebungstemperatur Tᵤ.

Der zweite Kompressor 8 verdichtet die Luft weiter auf 11,6 bar, die dann eine Temperatur von 120°C aufweist. Danach durchläuft die Luft nacheinander die Wärmespeicher 4, 5 und 6 und gibt Wärme an die Wärmespeicher ab. Beim Austritt aus den Wärmespeichern, liegt die Temperatur der Luft etwa um 15°C über der Umgebungstemperatur Tᵤ.

Der dritte Kompressor 9 verdichtet die Luft zusätzlich auf 40 bar, die dann eine Temperatur von 150°C aufweist. Danach durchläuft die Luft nacheinander die Wärmespeicher 4, 5 und 6 und gibt Wärme an die Wärmespeicher ab. Nachdem dem Austritt der Luft aus den Wärmspeichern durchläuft die Luft die Kältespeichervorrichtung 21 und wird in dieser unter die Umgebungstemperatur abgekühlt. Danach wird die Luft mit einem Druck von 40 bar in dem Druckbehälter 10 gespeichert. Da der Druckbehälter 10 gegenüber der Umgebung thermisch nicht isoliert ist, gleicht sich die Temperatur der in dem Druckbehälter gespeicherten Luft an die Umgebungstemperatur Tᵤ an.

Nachdem der Druckbehälter 10 gefüllt ist, weist der Wärmespeicher 4 eine Endtemperatur von 120°C, der Wärmespeicher 5 eine Endtemperatur von 90°C und der Wärmespeicher 6 eine Endtemperatur von 60°C auf.

### Zweite Prozessstufe:

Zum Betreiben der Turbinen 14 und 15 tritt die Luft aus dem Druckbehälter 10 aus, wird in der Kältespeichervorrichtung 21 vorerwärmt und durchläuft anschließend nacheinander die Wärmespeiche 6, 5 und 4. Dadurch wird die Luft auf 100°C erwärmt und der Turbine 14 zugeführt. Hinter der Turbine 14 wird die Luft in der Kältespeichervorrichtung 21 vorerwärmt und durchläuft anschließend nacheinander die Wärmespeiche 6, 5 und 4. Dadurch wird die Luft auf 100°C erwärmt und der Turbine 15 zugeführt. Anschließend wird die Luft an die Umgebung abgegeben.

### Bezugszeichenliste

1 Luft
2 Umgebung
3 Verdichter / Kompressor
4 Wärmespeicher
5 Wärmespeicher
6 Wärmespeicher
7 Wärmespeicheranordnung
8 Verdichter / Kompressor
9 Verdichter / Kompressor
10 Druckbehälter
11 Gasströmungspfad
12 Gasströmungspfad
13 Gasströmungspfad
14 Expansionsvorrichtung / Turbine
15 Expansionsvorrichtung / Turbine
16 Gasströmungspfad
17 Gasströmungspfad
18 Heizvorrichtung
19 Heizvorrichtung
20 Heizvorrichtung
21 Kältespeichervorrichtung
22 Wärmespeichermedium (Glycerin)
23 Wärmespeichermedium (Wasser)
24 Wärmespeichermedium (Wasser)
25 Kühlmittel
in Eingang des Druckbehälters
out Ausgang des Druckbehälters

## Patentansprüche

1. Vorrichtung zum vorübergehenden Speichern von Gas und Wärme, mit wenigstens einem Druckbehälter (10), mehreren Verdichtern (3, 8, 9), mittels welchen ein Gas (1) komprimierbar ist, mehreren in Reihe geschalteten Kompressionsstufen, die jeweils einen der Verdichter (3, 8, 9) und einen diesem nachgeschalteten Gasströmungspfad (11, 12, 13) umfassen, wobei einer reihenletzten der Kompressionsstufen der Druckbehälter (10) nachgeschaltet ist, in welchem das mittels der Verdichter (3, 8, 9) komprimierte Gas (1) speicherbar ist, und einer mehrere Wärmespeicher (4, 5, 6) umfassenden Wärmespeicheranordnung (7), mittels welcher durch das Komprimieren des Gases (1) erzeugte Kompressionswärme speicherbar ist, **dadurch gekennzeichnet, dass** die Wärmespeicheranordnung (7) in den Gasströmungspfad (11, 12, 13) jeder Kompressionsstufe geschaltet ist, den Wärmespeichern (4, 5, 6) eine Wärmespeicherreihenfolge zugeordnet ist und die Wärmespeicher (4, 5, 6) von dem Gasströmungspfad (11, 12, 13) jeder Kompressionsstufe in der Wärmespeicherreihenfolge nacheinander durchlaufen werden, wobei jedem Wärmespeicher (4, 5, 6) eine vorgegebene Mindesttemperatur zugeordnet ist und die Wärmespeicheranordnung (7) wenigstens eine Heizvorrichtung (18,19,20) aufweist, mittels welcher jeder Wärmespeicher (4, 5, 6) auf die ihm zugeordnete Mindesttemperatur erwärmbar ist, wobei die den Wärmespeichern (4, 5, 6) zugeordneten Mindesttemperaturen in der Wärmespeicherreihenfolge abnehmen.

2. Vorrichtung nach einem der vorangehenden Ansprüche, **dadurch gekennzeichnet, dass** jeder Wärmespeicher (4, 5, 6) ein flüssiges Wärmespeichermedium (22, 23, 24) aufweist, in welchem ein Teil der Kompressionswärme speicherbar ist.

3. Vorrichtung nach Anspruch 2, **dadurch gekennzeichnet, dass** die vorgegebene Mindesttemperatur des reihenfolgenersten Wärmspeichers (4) wenigstens 100°C beträgt und dessen Wärmespeichermedium (22) Glycerin ist.

4. Vorrichtung nach Anspruch 3, **dadurch gekennzeichnet, dass** die vorgegebene Mindesttemperatur des oder jedes dem reihenfolgenersten Wärmspeicher (4) nachgeschalteten Wärmespeichers (5, 6) weniger als 100°C beträgt und dessen Wärmespeichermedium (23, 24) Wasser ist.

5. Vorrichtung nach einem der vorangehenden Ansprüche, **dadurch gekennzeichnet, dass** das Gas (1) Luft ist.

6. Vorrichtung nach einem der vorangehenden Ansprüche, **gekennzeichnet durch** mehrere Expansionsvorrichtungen (14, 15), mittels welchen das Gas expandierbar ist, und mehreren in Reihe geschalteten Expansionsstufen, die jeweils eine der Expansionsvorrichtungen (14, 15) und einen dieser vorgeschalteten Gasströmungspfad (16, 17) umfassen, wobei einer reihenersten der Expansionsstufen der Druckbehälter (10) vorgeschaltet ist, die Wärmespeicheranordnung (7) in den Gasströmungspfad (16, 17) jeder Expansionsstufe geschaltet ist und die Wärmespeicher (4, 5, 6) von dem Gasströmungspfad (16, 17) jeder Expansionsstufe in der umgekehrten Wärmespeicherreihenfolge nacheinander durchlaufen werden.

7. Vorrichtung nach Anspruch 6, **dadurch gekennzeichnet, dass** in den Gasströmungspfad (13) der reihenletzten Kompressionsstufe zwischen die Wärmespeicheranordnung (7) und den Druckbehälter (10) eine Kältespeichervorrichtung (21) geschaltet ist, die ferner jeder der Expansionsvorrichtungen (14, 15) nachgeschaltet und durch die Kälte des expandierten Gases (1) abkühlbar ist, sodass mittels der Kältespeichervorrichtung (21) das dem Druckbehälter (10) zugeführte Gas abkühlbar ist.

8. Vorrichtung nach Anspruch 7, **dadurch gekennzeichnet, dass** die Kältespeichervorrichtung (21) zusätzlich in den Gasströmungspfad (16) der reihenersten Expansionsstufe vor die Wärmespeicheranordnung (7) geschaltet ist, sodass das den Expansionsstufen zugeführte Gas mittels der Kältespeichervorrichtung (21) vorerwärmbar ist.

9. Verfahren zum vorübergehenden Speichern von Gas und Wärme, wobei ein Gas (1) in mehreren Kompressionsstufen nacheinander komprimiert und anschließend in wenigstens einem Druckbehälter (10) gespeichert wird, und wobei durch das Komprimieren des Gases (1) erzeugte Kompressionswärme nach jeder Kompression in mehreren Wärmespeichern (4, 5, 6) gespeichert wird, **dadurch gekennzeichnet, dass** den Wärmespeichern (4, 5, 6) eine Wärmespeicherreihenfolge zugeordnet wird und das Gas (1) nach jeder Kompression die Wärmespeicher (4, 5, 6) in der Wärmespeicherreihenfolge nacheinander durchläuft, sodass die Kompressionswärme an die Wärmespeicher (4, 5, 6) abgegeben wird, wobei jedem Wärmespeicher (4, 5, 6) eine vorgegebene Mindesttemperatur zugeordnet wird und mittels wenigstens einer Heizvorrichtung jeder Wärmespeicher (4, 5, 6) zumindest auf der ihm zugeordneten Mindesttemperatur gehalten wird, wobei die den Wärmespeichern zugeordneten Mindesttemperaturen in der Wärmespeicherreihenfolge abnehmen.

10. Verfahren nach Anspruch 9, **dadurch gekennzeichnet, dass** das in dem Druckbehälter (10) gespeicherte Gas (1) in mehreren Expansionsstufen nacheinander expandiert wird, wobei das Gas (1) vor jeder Expansion die Wärmespeicher (4, 5, 6) in der umgekehrten Wärmespeicherreihenfolge nacheinander durchläuft und dadurch erwärmt wird.

## Claims

1. Device for temporarily storing gas and heat, with at least one pressure container (10), a plurality of compressors (3, 8, 9), by means of which a gas (1) can be compressed, a plurality of compression stages connected in series, which each comprises one of the compressors (3, 8, 9) and a gas flow path (11, 12, 13) connected downstream to said compressor, wherein the pressure container (10) is connected downstream to the last in series of the compression stages, in which the gas (1) the can be compressed by means of the compressors (3, 8, 9) can be stored, and a heat accumulator arrangement (7) comprising a plurality of heat accumulators (4, 5, 6), by means of which compression heat generated by compressing the gas (1) can be stored, **characterised in that** the heat accumulator arrangement (7) is connected in the gas flow path (11, 12, 13) of each compression stage, the heat accumulators (4, 5, 6) being assigned a heat accumulator sequence and the gas flow path (11, 12, 13) of each compression stage consecutively passing through the heat accumulators (4, 5, 6) in the heat accumulator sequence, wherein each heat accumulator (4, 5, 6) is assigned a predefined minimum temperature and the heat accumulator arrangement (7) has at least one heating device (18, 19, 20), by means of which each heat accumulator (4, 5, 6) can be heated to the minimum temperature assigned to it, wherein the minimum temperatures assigned to the heat accumulators (4, 5, 6) decrease in the heat accumulator sequence.

2. Device according to any one of the preceding claims, **characterised in that** each heat accumulator (4, 5, 6) has a liquid heat accumulator medium (22, 23, 24) in which a part of the compression heat can be stored.

3. Device according to claim 2, **characterised in that** the predefined minimum temperature of the heat accumulator (4) that is first in sequence is at least 100°C and its heat accumulator medium (22) is glycerine.

4. Device according to claim 3, **characterised in that** the predefined minimum temperature of the or each heat accumulator (5, 6) connected downstream to the heat accumulator (4) that is first in sequence is less than 100°C and its heat accumulator medium (23, 24) is water.

5. Device according to any one of the preceding claims, **characterised in that** the gas (1) is air.

6. Device according to any one of the preceding claims, **characterised by** a plurality of expansion devices (14, 15), by means of which the gas can be expanded, and a plurality of expansion stages connected in series, which each comprise one of the expansion devices (14, 15) and a gas flow path (16, 17) connected upstream thereto, wherein the pressure container (10) is connected upstream of the expansion stage that is first in series, the heat accumulator arrangement (7) is connected in the gas flow path (16, 17) of each expansion stage and the gas flow path (16, 17) of each expansion stage consecutively passes through the heat accumulators (4, 5, 6) in the reverse heat accumulator sequence.

7. Device according to claim 2, **characterised in that** a cold accumulator device (21) is connected in the gas flow path (13) of the compression stage that is last in series between the heat accumulator arrangement (7) and the pressure containers (10), said cold accumulator device is also connected downstream of each of the expansion devices (14, 15) and can be cooled by the cold of the expanded gas (1) such that the gas supplied to the pressure container (10) can be cooled by means of the cold accumulator device (21).

8. Device according to claim 7, **characterised in that** the cold accumulator device (21) is also connected in the gas flow path (16) of the expansion stage that is first in series before the heat accumulator arrangement (7) such that the gas supplied to the expansion stages can be pre-heated by means of the cold accumulator device (21).

9. Method for temporarily storing gas and heat, wherein a gas (1) is compressed consecutively in a plurality of compression stages and is subsequently stored in at least one pressure container (10) and wherein compression heat generated by compressing the gas (1) is stored following each compression in a plurality of heat accumulators (4, 5, 6), **characterised in that** the heat accumulators (4, 5, 6) being assigned a heat accumulator sequence and the gas (1) consecutively passes through the heat accumulators (4, 5, 6) in the heat accumulator sequence following each compression such that the compression heat is discharged to the heat accumulators (4, 5, 6), wherein each heat accumulator (4, 5, 6) is assigned a predefined minimum temperature and each heat accumulator (4, 5, 6) is held at least at the minimum temperature assigned to it by means of at least one heating device, wherein the minimum temperatures assigned to the heat accumulators decrease in the heat accumulator sequence.

10. Method according to claim 9, **characterised in that** the gas stored in the pressure container (10) is consecutively expanded in a plurality of expansion stages, wherein the gas (1) consecutively passes through the heat accumulators (4, 5, 6) in the reversed heat accumulator sequence prior to each expansion and is heated as a result.

## Revendications

1. Dispositif pour l'accumulation provisoire de gaz et de chaleur, avec au moins un récipient sous pression (10), plusieurs compresseurs (3, 8, 9), au moyen desquels un gaz (1) peut être comprimé, plusieurs étages de compression branchés en série, qui comprennent chacun un des compresseurs (3, 8, 9) et un trajet d'écoulement de gaz (11, 12, 13) disposé en aval de celui-ci, le récipient sous pression (10), dans lequel le gaz (1) comprimé au moyen des compresseurs (3, 8, 9) peut être accumulé, étant disposé en aval du dernier des étages de compression, et une disposition d'accumulateurs de chaleur (7), comprenant plusieurs accumulateurs de chaleur (4, 5, 6), au moyen de laquelle la chaleur de compression produite par la compression du gaz (1) peut être accumulée, **caractérisé en ce que** la disposition d'accumulateurs de chaleur (7) est disposée dans le trajet d'écoulement de gaz (11, 12, 13) de chaque étage de compression, un ordre d'accumulateurs de chaleur est attribué aux accumulateurs de chaleur (4, 5, 6) et les accumulateurs de chaleur (4, 5, 6) sont traversés successivement par le trajet d'écoulement de gaz (11, 12, 13) de chaque étage de compression dans l'ordre des accumulateurs de chaleur, une température minimale prédéterminée est attribuée à chaque accumulateur de chaleur (4, 5, 6) et la disposition d'accumulateurs de chaleur (7) comprend au moins un dispositif de chauffage (18, 19, 20), au moyen duquel chaque accumulateur de chaleur (4, 5, 6) peut être chauffé à la température minimale qui lui est attribuée, les températures minimales correspondant aux accumulateurs de chaleur (4, 5, 6) diminuant dans l'ordre des accumulateurs de chaleur.

2. Dispositif selon l'une des revendications précédentes, **caractérisé en ce que** chaque accumulateur de chaleur (4, 5, 6) comprend un fluide accumulateur de chaleur (22, 23, 24) dans lequel une partie de la chaleur de compression peut être accumulée.

3. Dispositif selon la revendication 2,
**caractérisé en ce que** la température minimale prédéterminée du premier de l'ordre des accumulateurs de chaleur (4) est d'au moins 100 °C et son fluide accumulateur de chaleur (22) est la glycérine.

4. Dispositif selon la revendication 3,
**caractérisé en ce que** la température minimale prédéterminée du ou de chacun des accumulateurs de chaleur (5, 6) disposés en aval du premier de l'ordre des accumulateurs de chaleur (4), est inférieure à 100 °C et leur fluide accumulateur de chaleur (23, 24) est l'eau.

5. Dispositif selon l'une des revendications précédentes, **caractérisé en ce que** le gaz (1) est l'air.

6. Dispositif selon l'une des revendications précédentes, **caractérisé par** plusieurs dispositifs d'expansion (14, 15), au moyen desquels le gaz peut être dilaté, et plusieurs étages d'expansion disposés en série, qui comprennent chacun un des dispositifs d'expansion (14, 15) et un trajet d'écoulement de gaz (16, 17) disposé en amont de ceux-ci, le récipient sous pression (10) étant disposé en amont du premier des étages d'expansion, la disposition d'accumulateurs de chaleur (7) étant disposée dans le trajet d'écoulement du gaz (16, 17) de chaque étage d'expansion et les accumulateurs de chaleur (4, 5, 6) étant traversés par le trajet d'écoulement de gaz (16, 17) de chaque étage d'expansion successivement dans l'ordre inverse des accumulateurs de chaleur.

7. Dispositif selon la revendication 6, **caractérisé en ce que**, dans le trajet d'écoulement du gaz (13) du dernier étage de compression, entre la disposition d'accumulateurs de chaleur (7) et le récipient sous pression (10), est disposé un dispositif accumulateur de froid (21), qui est disposé en outre en aval de chacun des dispositifs d'expansion (14, 15) et qui peut être refroidi par le froid du gaz dilaté (1), de façon à ce que, au moyen du dispositif accumulateur de froid (21), le gaz introduit dans le récipient sous pression (10) puisse être refroidi.

8. Dispositif selon la revendication 7, **caractérisé en ce que** le dispositif accumulateur de froid (21) est disposé en outre dans le trajet d'écoulement de gaz (16) du premier étage d'expansion avant la disposition d'accumulateurs de chaleur (7), de façon à ce que le gaz introduit dans les étages d'expansion puisse être préchauffé au moyen du dispositif accumulateur de froid (21).

9. Procédé d'accumulation provisoire de gaz et de chaleur, un gaz (1) étant comprimé successivement dans plusieurs étages de compression puis accumulé dans au moins un récipient sous pression (10) et la chaleur de compression produite par la compression du gaz (1) étant accumulée après chaque compression dans plusieurs accumulateurs de chaleur (4, 5, 6), **caractérisé en ce qu'**un ordre d'accumulateurs de chaleur est attribué aux accumulateurs de chaleur (4, 5, 6) et le gaz (1) traversant, après chaque compression, les accumulateurs de chaleur (4, 5, 6) successivement dans l'ordre des accumulateurs de chaleur, de façon à ce que la chaleur de compression soit transférée aux accumulateur de chaleur (4, 5, 6), une température minimale prédéterminée est attribuée à chaque accumulateur de chaleur (4, 5, 6) et, au moyen d'au moins un dispositif de chauffage, chaque accumulateur de chaleur (4, 5, 6) est au moins maintenu à la température minimale qui lui est attribuée, les températures minimales correspondant aux accumulateurs de chaleur diminuant dans l'ordre des accumulateurs de chaleur.

10. Procédé selon la revendication 9, **caractérisé en ce que** le gaz (1) accumulé dans le récipient sous pression (10) est dilaté successivement dans plusieurs étages d'expansion, le gaz (1) traversant successivement, avant chaque expansion, les accumulateurs de chaleur (4, 5, 6) dans l'ordre inverse des accumulateurs de chaleur et étant ainsi chauffé.
